# EUROPÄISCHE PATENTSCHRIFT

(11) **EP 2 984 701 B1**
(45) Veröffentlichungstag und Bekanntmachung des Hinweises auf die Patenterteilung: **12.02.2020**
(21) Anmeldenummer: 14713465.4
(22) Anmeldetag: 27.03.2014
(51) Int. Cl.: H01M 10/613, H01M 10/615, H01M 10/625, H01M 10/653, H01M 10/6556, H01M 10/6571, H01M 10/6551, H01M 10/6554, F28D 9/00, H05B 3/22, F28D 21/00

(54) **WÄRMEÜBERTRAGERBAUTEIL**
HEAT EXCHANGER COMPONENT
PIÈCE ÉCHANGEUSE DE CHALEUR

(30) Priorität: 12.04.2013 DE 202013004978 U; 29.05.2013 DE 102013210094
(43) Veröffentlichungstag der Anmeldung: 17.02.2016
(73) Patentinhaber: MAHLE Behr GmbH & Co. KG, 70469 Stuttgart (DE)
(72) Erfinder: SCHMID, Caroline, 70192 Stuttgart (DE); MOSER, Michael, 73492 Rainau (DE); DAUBITZER, Nikolaus, 70376 Stuttgart (DE); NEFF, Heiko, 71549 Auenwald (DE); RAIBLE, Dominique, 72108 Rottenburg (DE); SCHNAARS, Alexandra, 71672 Marbach (DE); SCHALL, Volker, 71282 Hemmingen (DE); SAUTTER, Nic, 73207 Plochingen (DE); HIRSCH, Stefan, 70180 Stuttgart (DE)
(74) Vertreter: BRP Renaud & Partner mbB Rechtsanwälte Patentanwälte Steuerberater
(86) Internationale Anmeldenummer: PCT/EP2014/056209
(87) Internationale Veröffentlichungsnummer: WO 2014/166757

(56) Entgegenhaltungen:
- EP-A1- 0 806 805
- WO-A2-03/103083
- DE-A1-102006 010 221
- DE-A1-102008 059 952
- DE-A1-102009 005 854
- DE-A1-102009 042 270
- DE-A1-102011 003 296
- DE-A1-102011 003 535
- DE-A1-102011 075 820
- DE-A1-102011 084 002
- US-A1- 2011 300 421

## Beschreibung

Die vorliegende Erfindung betrifft ein Wärmeübertragerbauteil eines Temperierungssystems eines elektrischen Energiespeichers gemäß dem Oberbegriff des Anspruchs 1. Die Erfindung betrifft außerdem einen elektrischen Energiespeicher mit einem derartigen Wärmeübertragerbauteil sowie ein Verfahren zur Herstellung eines solchen Wärmeübertragerbauteils.

Für die Temperierung von Batterien moderner Hybrid- und Elektrofahrzeuge werden üblicherweise fluiddurchströmte Kühlplatten und/oder eine zusätzliche Heizung verwendet. Aufgrund der in der Regel besseren Wärmeleiteigenschaften werden diese Kühlplatten meist aus metallischen oder elektrisch leitenden Werkstoffen hergestellt. Da die verwendeten Batteriezellen üblicherweise ein Gehäuse aus einem metallischen Werkstoff besitzen, ist zur Vermeidung von Kurzschlüssen und Kriechströmen eine zusätzliche elektrische Isolierung zwischen den Kühlplatten und den Batteriezellen erforderlich. Um diese Isolierung gewährleisten zu können, werden üblicherweise dünne Kunststofffolien oder aufgebrachte Schichten aus wärmeleitfähigem Material, wie bspw. Silikon, verwendet. Das Aufbringen derartiger Isolierschichten ist jedoch zumeist mit erheblichem Aufwand verbunden, bspw. Vorbearbeitung, Reinigung und Partikelminimierung, wobei Beschichtungen aus Silikon zumeist sehr teuer und aufgrund ihrer viskosen Eigenschaften in der Verarbeitung problematisch sind. Hinzu kommt eine notwendige Aushärtezeit, die sich negativ auf die Herstellungskosten auswirkt.

Eine zusätzliche Heizung erfordert ein zusätzliches Bauteil oder eine zusätzliche Beschichtung, das/die ähnlich wie die oben genannte Isolationsschicht aufgebracht werden oder als zusätzliches externes Bauteil im Kühlkreislauf integriert werden muss. Hierdurch entstehen weitere Kosten, wobei diese Lösung zudem auch nachteilig hinsichtlich des zur Verfügung stehenden Bauraums ist.

Aus der US 2011/0300421 A1 ist ein elektrischer Energiespeicher bekannt, der mehrere Batteriezellen umfasst. Zur Temperierung der Batteriezellen weist der Energiespeicher ein Wärmeübertragerbauteil mit mehreren Schichten auf. Eine der Schichten ist eine Isolationsschicht. Eine weitere Schicht ist eine elektrische Heizschicht. Ferner ist eine mit einem Fluidkanal ausgestattete Wärmespeicherschicht vorgesehen.

Aus der DE 10 2011 003 535 A1 ist ein Schichtblechkühler sowie ein Kühler mit mehreren Extrusionsprofilen für ein elektrochemisches Energiespeichermodul bekannt, wobei der Schichtblechkühler oder der Kühler mit mehreren Extrusionsprofilen mit elektrischen Heizkomponenten ausgestattet sein kann.

Die vorliegende Erfindung beschäftigt sich daher mit dem Problem, für ein Wärmeübertragerbauteil der gattungsgemäßen Art eine verbesserte oder zumindest eine alternative Ausführungsform anzugeben, die insbesondere die aus dem Stand der Technik bekannten Nachteile vermeidet, zumindest aber reduziert.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine bisher bekannte Kühlplatte eines Temperierungssystems eines elektrischen Energiespeichers mit bspw. zusätzlichen Heizschichten, erfindungsgemäß nunmehr als mehrschichtiges Wärmeübertragerbauteil auszubilden, wobei jeder Schicht nunmehr eine eigene Funktion zugewiesen wird. Erfindungsgemäß ist somit das Wärmeübertragerbauteil aus einem Trägermaterial und zumindest zwei Schichten ausgebildet, wovon eine erste Schicht elektrisch isolierend wirkt und eine zweite Schicht eine Temperierung, das heißt ein Kühlen und ein Beheizen des elektrischen Energiespeichers ermöglicht. Die elektrisch isolierende Schicht, welche rein theoretisch auch durch das Trägermaterial selbst gebildet sein kann, ermöglicht eine direkte Kopplung des Wärmeübertragerbauteils mit einem Gehäuse des Energiespeichers bzw. mit Batteriezellen desselben, wodurch zudem eine kompakte Bauweise und eine optimale Wärmeübertragung, insbesondere eine Kühlung, erzielt werden können. Durch den mehrschichtigen Aufbau des erfindungsgemäßen Wärmeübertragerbauteils kann darüber hinaus das bisher erforderliche separate und aufwendige Aufbringen der isolierenden Kunststofffolie vermieden werden, wodurch sich erhebliche Vorteile hinsichtlich des Fertigungsprozesses ergeben. Der mehrschichtige Aufbau des erfindungsgemäßen Wärmeübertragerbauteils erlaubt zudem eine komplett separate Fertigung desselben und zwar darüber hinaus angepasst an individuelle Anforderungen, so dass generell Wärmeübertragerbauteile hergestellt werden können, die durch eine individuell festgelegte Schichtanzahl bzw. einen individuell festgelegten Schichtaufbau die jeweiligen Anforderungen optimal erfüllen. Darüber hinaus lässt das erfindungsgemäße Wärmeübertragerbauteil dem Konstrukteur höchste Freiheiten bezüglich der Formgestaltung bei gleichzeitiger Reduzierung von Gewicht und Kosten.

Bei der erfindungsgemäßen Lösung weist das Trägermaterial faserverstärkten Kunststoff auf, wobei das Trägermaterial bspw. als Organoblech, als faserverstärktes Tape bzw. faserverstärktes Organoblech oder als Kunststofflaminat mit integrierten Metallschichten, insbesondere Bewehrungsschichten zur mechanischen Versteifung, ausgebildet sein kann. Als Fasern können hierbei insbesondere Kohlefasern, Aramidfasern oder Glasfasern aber auch Fasermatten und -gewebe, wie bspw. Rowings, zum Einsatz kommen. Derartige Fasermatten sind bspw. aus dem Kunststoffformenbau hinlänglich bekannt. Die Fasern selbst können dabei kurz, lang oder als Endlosfasern ausgebildet sein, wobei die Fasern selbst aufgrund ihrer vergleichsweise hohen Zugfestigkeit eine deutliche Versteifung des erfindungsgemäßen Wärmeübertragerbauteils bei gleichzeitig äußerst geringem Gewicht bewirken können. Dabei ist es generell auch möglich, Schichten mit mehreren so genannten Tapes aufzubauen, wobei die einzelnen Tapes mit verschiedenen Fasern bzw. Funktionswerkstoffen gefüllt sein können. Dadurch können einzelne Funktionen, wie bspw. mechanische Festigkeit, Heizung, Isolierung und Diffusionsdichtheit aufgeteilt werden, um so einerseits eine optimale Variabilität in der Erreichung der Anforderungen zu erhalten und andererseits die Kosten zu begrenzen, indem der Schichtaufbau anforderungsgerecht und mit maximal notwendiger Effektivität zusammengestellt wird.

Die Integration von Funktionswerkstoffen kann dabei auch schon in der Halbteilherstellung von z. Bsp. faserverstärkten Verbundwerkstoffen oder Prepregs, wie bspw. Organoblechen oder -tapes stattfinden. Hierdurch können spätere Formen für z. Bsp. eine Fluidführung, wie bspw. Fluidkanäle, bereits vorgefertigt werden, wodurch der hierfür erforderliche spätere Formgebungsprozess entfallen kann. Mögliche Herstellungsverfahren sind hierbei insbesondere Weben oder Stricken der Fasern, die dann in einem weiteren Arbeitsschritt von dem Trägermaterial, bspw. einer Kunststoffmatrix, umgeben werden. Desweiteren können solche Strukturen auch aus einem metallischen bzw. wärmeleitenden Material (z. Bsp. in Form von Geweben, Gestricken, Gittern oder Umformteilen) bestehen und nachträglich mit an- oder umspritzten Kunststoffflächen oder geformten Kunststoffteilen eine entsprechende Fluidführung generieren. Des Weiteren können auch sog. Hybridgewebe, bestehend aus verschiedenen Faserwerkstoffen o.g. Funktionalisierung übernehmen.

Darüber hinaus ist denkbar, dass diese Strukturen die aufgebrachte Kunststoffoberfläche auch durchdringen und in direktem Kontakt mit der zu kühlenden Komponente, das heißt bspw. dem elektrischen Energiespeicher, stehen. Damit würde sich die Wärmeübertragung im Vergleich zu einer Kunststoffoberfläche deutlich erhöhen. In einer weiteren Ausgestaltung könnten die durchdringenden Bauteile in Kontakt zur äußeren Umgebung stehen und damit das im Inneren des Wärmeübertragerbauteils befindliche Kühlfluid bzw. Kühlmedium kühlen. Hierdurch ist eine weitere Nutzung des erfindungsgemäßen Wärmeübertragerbauteils mit umgekehrtem Wärmeleitpfad möglich. Eine entsprechende Formgebung der durchdringenden Elemente mit großer Oberflächenstruktur verbessert dabei den Wärmeaustausch mit der äußeren Umgebung. Insbesondere kann somit bei einer vorteilhaften Weiterbildung des erfindungsgemäßen Wärmeübertragerbauteils die zweite Schicht eine vergrößerte Oberfläche aufweisen, die bspw. durch Dorne bzw. Flossen gebildet wird.

Erfindungsgemäß weist die zweite Schicht Fluidkanäle auf, die von einem Wärmetauscherfluid bzw. einem Wärmetauschermedium durchströmbar sind. Generell dient somit der mehrschichtige Aufbau zur Integration eines Kanalsystems für das Wärmetauschermedium welches vorzugsweise einen direkten wärmeübertragenden Kontakt mit dem zu temperierenden elektrischen Energiespeicher aufweist. Die geformten Fluidkanäle beinhalten dabei zusätzlich Elemente zur Steigerung der mechanischen Festigkeit, die bspw. aus Metall oder aus Kunststoff bestehen und während des Fertigungsprozesses eingelegt und/oder form- oder stoffschlüssig in das Trägermaterial eingebunden werden. Weiter ist erfindungsgemäß vorgesehen, dass die zweite Schicht eine elektrisch betreibbare Heizeinrichtung aufweist, und dass das Wärmeübertragerbauteil mittels Laminieren, Kaschieren, Verpressen, Pultrusieren, Sintern, Thermoformen, Spritzgießen oder Blasextruieren hergestellt ist.

Generell können auch an die zweite Schicht angeformte, insbesondere angespritzte, Stutzen zur Ver-/Entsorgung der zweiten Schicht mit Wärmetauscherfluid vorgesehen sein, wobei diese Fluidführung, die nicht direkt aus dem Schichtaufbau gebildet ist, aus unterschiedlichsten Materialien bestehen kann, bspw. Kunststoff, Metall, Schaumstoff. Die Fertigung der externen Fluidführung, wie bspw. Stutzen, kann unter anderem durch folgende Fertigungsverfahren realisiert werden: Spritzgießen (Anspritzen/Umspritzen, im Spritzgusswerkzeug umformen, Sonderverfahren, wie bspw. Gasinjektion, Fluidinjektion), Kleben, Thermoformen, Stanzen, Blasformen, Zerspanen oder Druckgießen. Eine weitere Möglichkeit bietet das Prägen bzw. Pressen von sog. Organoblechen in bestimmte Formen. Dadurch kann auf der einen Seite eine ebene Oberfläche und auf der anderen Seite eine Fluidführung ohne zusätzlich notwendiges Material geformt werden. Dies wird dadurch realisiert, dass vorhandenes Matrixmaterial aus dem faserverstärkten Verbundwerkstoff in entsprechende Kavitäten eines Präge-/Presswerkzeuges gedrückt wird. Dies erspart den zusätzlichen Prozessschritt des Anspritzens oder zusätzliche Bauteile und/ oder Material.

Sollen durch Verpressen/Prägen des sog. Organoblechs Strukturen erzeugt werden für welche das Matrixmaterial nicht ausreichend ist, so kann mittels Einbringen von Zusatzmaterial die Matrixmenge erhöht werden. Hierfür kann das Zusatzmaterial in Form von einer Folie oder auch als Granulat hinzugefügt werden. Ebenfalls denkbar wäre das zusätzliche Einbringen von Schmelze. Folien aus dem entsprechenden Matrixmaterial können entweder direkt im Herstellprozess des Organoblechs oder in einem zusätzlichen Prozessschritt oder integriert in das Verpressen/Prägen des Organoblechs aufgebracht werden.

Granulat oder auch Mahlgut des entsprechenden Matrixmaterials kann durch verschiedene Verfahren ins Press-/Prägewerkzeug eingebracht werden: Manuell über ein Dosiersystem oder über eine Rüttelfunktion im Press-/Prägewerkzeug mit Abziehvorrichtung. Bei der manuellen Zuführung werden die einzelnen Granulatkörner in definierter Anzahl in die jeweiligen, hierfür vorgesehenen Werkzeugvertiefungen, welche im anschließenden Press- /Prägeprozess die gewünschte Struktur formen, eingebracht. Anhand des Dosiersystems kann eine definierte Menge an Granulat dosiert und vorsortiert werden, um diese anschließend im Prozess manuell oder automatisch ausgelöst in die im Werkzeug vorgesehenen Vertiefungen zu geben. Darüber hinaus besteht die Möglichkeit, eine undefinierte Menge an Granulatkörnern auf die Press-/Prägewerkzeughälfte, welche die Vertiefungen enthält, aufzubringen, sodass über eine Rüttelfunktion die einzelnen Granulatkörner in die Vertiefungen fallen. Anschließend wird über eine Abziehvorrichtung das überschüssige Granulat von der Oberfläche des Press-/Prägewerkzeuge entfernt, über eine Auffangvorrichtung gesammelt und dem Prozess wieder zugeführt.

Des Weiteren besteht die Möglichkeit des Einsatzes der Drehtisch- oder Schiebetischtechnik, um die Zugänglichkeit des Werkzeuges für die Zuführung des Granulats zu realisieren bzw. zu verbessern. Neben Folie und Granulat besteht auch wie oben genannt die Möglichkeit das Zusatzmaterial als Schmelze dem Press- /Prägewerkzeug zuzuführen. Hierbei wird das so genannte Organoblech in das Press-/Prägewerkzeug eingelegt und die gewünschte Struktur anhand des Spritzprägeprozesses gebildet.

Außerdem kann im Formgebungsprozess zusätzlich eine stutzenförmige Öffnung angeformt werden, die die Möglichkeit einer Verstärkung eines später angespritzten oder eingefügten Stutzens (Ein- oder Auslass) bietet oder die angeformte stutzenförmige Öffnung kann selbst diesen Ein- bzw. Auslass darstellen. Ein Vorteil dieses Verfahrens ist die Ausrichtung der Fasern in den mechanisch höher belasteten Übergang vom Wärmetauscherbauteil in die jeweilige Anschlussgeometrie. Um eine noch bessere Faserausrichtung zu erhalten und um eine nachträglich angespritzte Stutzengeometrie noch besser mit dem Wärmeübertragerbauteil zu verbinden, kann bspw. ein Organoblech bereits bei der Herstellung eine Aussparung enthalten, die nicht mit dem Trägermaterial versehen wird. Diese Aussparung kann bspw. mit einem Stempel freigehalten werden. Die offenliegenden Fasern können anschließend durchbrochen und durch Formgebung den Ansatz des Stutzens darstellen, der anschließend mit Kunststoff an die Fasern angespritzt wird. Hierdurch können auch weitere Bauteile, wie bspw. Positionierlaschen und Befestigungselemente integriert werden. Ebenfalls besteht die Möglichkeit, den Stutzen nachträglich an ein sich im Schichtaufbau befindliches Loch anzubinden, bspw. Überschweißen, Kleben, Spritzgießen oder Ähnliches. Die Herstellung des Loches im Schichtaufbau kann sowohl während der Herstellung des Schichtaufbaus als auch durch nachträglich mechanische Bearbeitung erfolgen. Desweiteren können Bauteile mit z. Bsp. Rohrgeometrien als Ein- bzw. Auslassstutzen mit tellerförmigen Boden im Schichtaufbau integriert und mit oben genanntem Verfahren mit einem Wärmeübertragerbauteil fixiert werden. Die Integration der elektrisch isolierenden Schicht erfolgt durch den Werkstoff selbst, bspw. durch das Trägermaterial, wobei eine Integration einer Heizung bspw. durch Einbringen von bestrombaren Metallschichten zwischen einzelne Lage des Trägermaterials erfolgt. Selbstverständlich ist aber auch ein Einbringen einer Folie oder ein Aufdrucken auf das Trägermaterial oder die Verwendung von leitenden Fasern denkbar. Durch insbesondere die zuletzt genannten Zusatzmaterialien kann der Wärmedurchgang durch den Schichtaufbau verbessert und dadurch die Kühlleistung optimiert werden, da die in diesem Aufbau verwendeten Materialien in der Regel eine geringere Wandstärke erlauben. Desweiteren kann das Trägermaterial mit Partikeln zur Verbesserung des Wärmedurchgangs, bspw. Metallpartikel, angereichert werden. Durch den individuell wählbaren Schichtaufbau ist es zudem möglich, nur bestimmte Schichten mit derartigen Partikeln zu befüllen, um bspw. die durch diese Partikel eintretende Verringerung der mechanischen Festigkeit durch andere Schichten wieder auszugleichen.

Darüber hinaus können auch weitere Schichten zur Diffusionsdichtheit gegenüber Medien im Wärmeübertrager Verwendung finden, wobei selbstverständlich auch ein zusätzliches Verdichten der Kunststoffschichten durch bspw. chemische, chemisch-elektrische oder physikalische (Plasma-)Verfahren Anwendung finden können. Durch die Auswahl entsprechender Kunststoffe für das Trägermaterial bzw. für das Material weiterer Schichten, kann auch eine Membranfunktion mit einer gezielten gerichteten Diffusion erreicht werden, bspw. von der Oberfläche des Wärmeübertragerbauteils in dieses selbst und weiter in ein dort strömendes Kühlmedium. Durch den individuell frei wählbaren Schichtaufbau ist die Temperierung des elektrischen Energiespeichers, insbesondere dessen Kühlung, variabel und äußerst flexibel herstellbar. Einzelne Schichten können dabei abhängig von den Anforderungen in unterschiedlichsten Kombinationen hergestellt bzw. weggelassen werden.

Mit dem erfindungsgemäßen Wärmeübertragerbauteil lässt sich insbesondere das bisher aufwendige elektrische Isolieren einsparen sowie der Aufwand für zusätzliche Bauteile und Bearbeitungsschritte reduzieren, wodurch Kosten und Gewicht gesenkt werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine schematische Schnittdarstellung durch ein erfindungsgemäßes Wärmeübertragerbauteil mit mehreren Schichten,
- Fig. 2: eine weitere Ausführungsform des erfindungsgemäßen Wärmeübertragerbauteils in einem Fluidkanal und einer wärmeleitenden Struktur sowie einer vergrößerten Oberfläche zum verbesserten Wärmetausch,
- Fig. 3a: eine weitere mögliche Ausführungsform einer Schicht des erfindungsgemäßen Wärmeübertragerbauteils mit integriertem Fluidkanal,
- Fig. 3b: eine Darstellung wie in Fig. 3a, jedoch von der anderen Seite,
- Fig. 3c: eine Detaildarstellung eines an die Schicht angeformten Stutzens,
- Fig. 4a: eine Detaildarstellung einer Bewehrung zur mechanischen Verstärkung einer Schicht des erfindungsgemäßen Wärmeübertragerbauteils,
- Fig. 4b: eine Schnittansicht auf das erfindungsgemäße Wärmeübertragerbauteil mit mehreren bewährten Schichten,
- Fig. 5: eine Möglichkeit zum Einbringen einer Aussparung für einen späteren Ein- oder Auslass,
- Fig. 6: eine mögliche Ausführungsform einer Schicht des erfindungsgemäßen Wärmeübertragerbauteils mit elektrischen betreibbaren Heizeinrichtung,
- Fig. 7a bis 7d: mögliche Verfahrensschritte zur Herstellung eines Stutzens, bspw. eines Ein- oder Auslasses in eine Schicht des Wärmeübertragerbauteils,
- Fig. 8: das Integrieren eines Stutzens mit einem tellerförmigen Boden in ein Gelege einer Schicht des erfindungsgemäßen Wärmeübertragerbauteils,
- Fig. 9: eine Darstellung wie in Fig. 8, jedoch bei integriertem Stutzen,
- Fig. 10a: eine Druckplatte eines Präge-/Presswerkzeugs zur Herstellung einer fluidführenden Schicht eines Wärmeübertragerbauteils,
- Fig. 10b: eine Matrize eines Präge-/Presswerkzeugs zur Herstellung einer fluidführenden Schicht eines Wärmeübertragerbauteils,
- Fig. 11: eine Seitenansicht auf das Präge-/Presswerkzeugs zur Herstellung einer fluidführenden Schicht eines Wärmeübertragerbauteils.

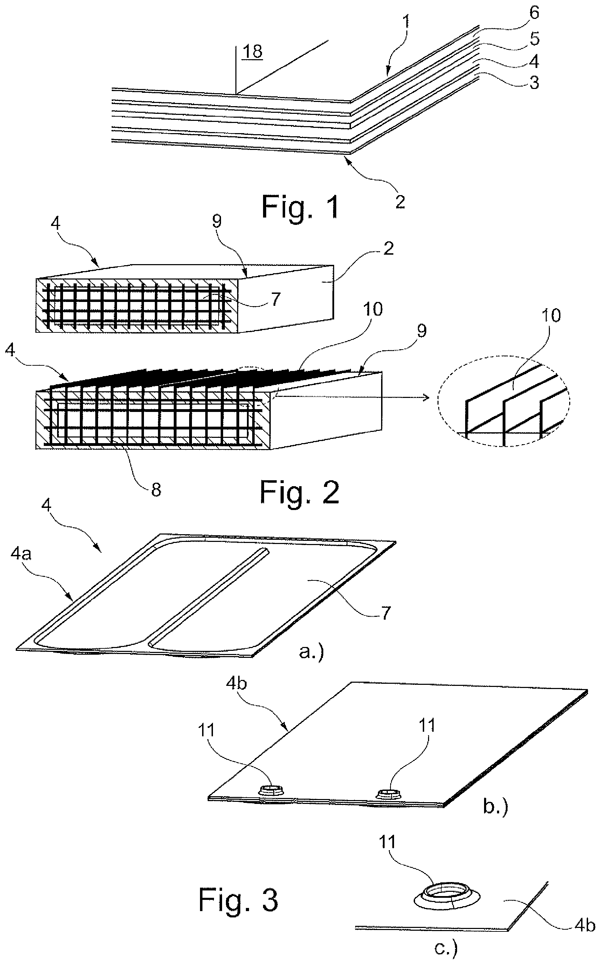

Entsprechend der Fig. 1, weist ein erfindungsgemäßes Wärmeübertragerbauteil 1 eines im Übrigen nicht gezeigten Temperierungssystems eines elektrischen Energiespeichers 18, bspw. eines Kühlsystems für eine Traktionsbatterie eines Elektro- oder eines Hybridfahrzeugs, ein Trägermaterial 2, bspw. einen faserverstärkten Kunststoff, sowie zumindest zwei Schichten 3, 4 auf. Die erste Schicht 3 wirkt dabei elektrisch isolierend, wogegen die zweite Schicht 4 eine Temperierung, das heißt ein Kühlen und/oder ein Beheizen des elektrischen Energiespeichers 18 ermöglicht. Die erste Schicht 3 kann rein theoretisch aus dem Trägermaterial 2 selbst gebildet sein oder aber von diesem umschlossen werden. Gemäß der Fig. 1 zeigt das erfindungsgemäße Wärmeübertragerbauteil 1 weitere Schichten 5, 6, die bspw. durch jeweils eine Schicht des Trägermaterials 2 voneinander getrennt sind. Generell umfasst das Trägermaterial 2 Kunststoffe aus faserverstärktem Kunststoff, oder als Organoblech, als faserverstärktes Tape bzw. Organoblech oder als Kunststofflaminat mit integrierten Metallschichten, bspw. einer metallischen Bewehrung. Eine Herstellung des Wärmeübertragerbauteils 1 erfolgt dabei mittels Laminieren, Kaschieren, Verpressen, Pultrusieren, Sintern, Thermoformen, Spritzgießen oder Blasextrudieren.

Wie bereits erwähnt, werden für das Trägermaterial 2 Kunststoffe bzw. faserverstärkte Verbundwerkstoffe verwendet, die nicht nur eine vergleichsweise hohe Festigkeit, sondern zudem auch ein vergleichsweise geringes Gewicht des Wärmeübertragerbauteils 1 ermöglichen. Durch den mehrschichtigen Aufbau des erfindungsgemäßen Wärmeübertragerbauteils 1 ist es zudem möglich, einzelnen Schichten individuelle Funktionen, wie bspw. Heizung/Kühlung, elektrische Isolierung oder thermische Isolierung bzw. Diffusionsdichtheit zuzuordnen. Die Integration von Funktionswerkstoffen wie bspw. Kohlefasern, Glasfasern oder generell Fasern, kann dabei schon in der Halbzeugherstellung stattfinden, wodurch spätere Formen bzw. Umformungen, für bspw. einen Fluidkanal 7 (vgl. Fig. 3), entfallen können. Die Fasern können dabei gerichtet in der jeweiligen Schicht bzw. im Trägermaterial 2 angeordnet werden oder aber eine isotrope Verteilung aufweisen, wodurch die jeweilige Schicht isotrope Festigkeitseigenschaften, das heißt richtungsunabhängige Eigenschaften, besitzt.

Betrachtet man die Schicht 4 gemäß der Fig. 2, so kann man erkennen, dass in dieser ein Fluidkanal 7 verläuft, durch welchen ein Wärmetauschermedium, bspw. ein Kühlmittel, strömt. Um dabei eine Wärmeübertragung zum temperierenden Gegenstand, bspw. zum Energiespeicher, verbessern zu können, kann eine wärmeleitende Struktur 8 integriert werden, bspw. in Form eines gut wärmeleitfähigen Gewebes, Gestricks, Gitters oder ähnlichem, welches in das Trägermaterial 2 bzw. in das den Fluidkanal 7 umgebende Material, eingebunden ist. Hierfür eignen sich insbesondere metallische Gewebe bzw. Gestricke. Mittels der wärmeleitenden Struktur 8 kann eine besonders hohe Wärmeübertragungsrate von den im Fluidkanal 7 strömenden Wärmetauschermedium an eine Oberfläche 9 der zweiten Schicht 4 bzw. des Wärmeübertragerbauteils 1 erreicht werden, wobei an dieser Oberfläche 9 bspw. Rippen, Zehen, Dorne oder Flossen zur Vergrößerung der Oberfläche und damit zur Erhöhung der Wärmeübertragungsrate angeordnet sein können. Hierdurch kann die Wärmeleitfähigkeit und auch die Wärmeübertragung und damit die Kühlwirkung im Vergleich zu einer Kunststoffoberfläche deutlich erhöht werden. Ist die wärmeleitende Struktur 8 als Metallgitter ausgebildet, so kann diese auch die Aufgabe einer Bewehrung, das heißt einer mechanischen Versteifung der jeweiligen Schicht 4, übernehmen.

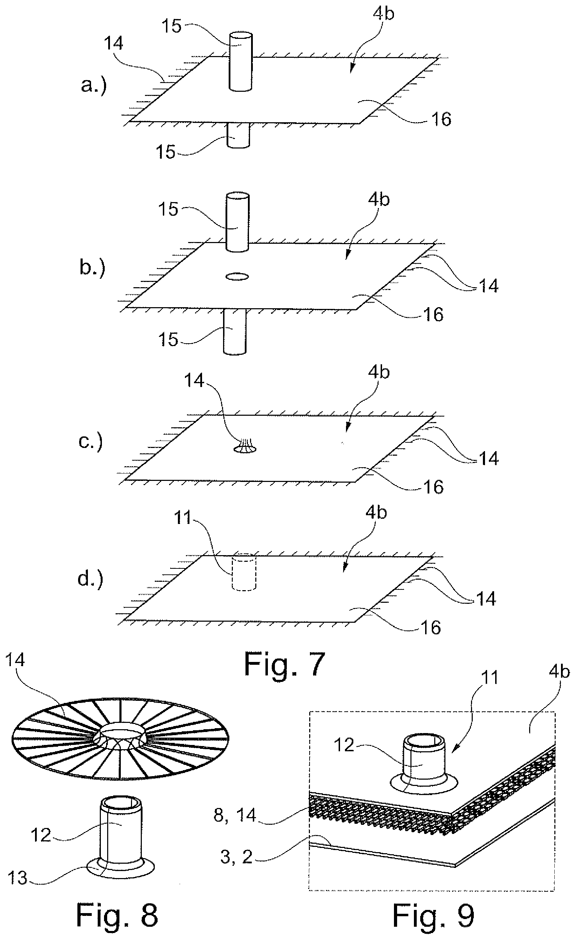

Betrachtet man die Fig. 3, so kann man erkennen, dass in die zweite Schicht 4 besagter Fluidkanal 7 integriert ist, in welchem das Wärmetauschermedium strömen kann. Der Fluidkanal 7 ist dabei von zwei Teilschichten 4a und 4d der zweiten Schicht 4 begrenzt, wobei die beiden Teilschichten 4a und 4d (vgl. Fig. 3a und 3b) mittels Kleben bzw. Schweißen miteinander verbunden sein können. An die zweite Schicht 4 bzw. die Teilschicht 4b kann darüber hinaus ein Stutzen 11 (vgl. Fig. 3b und 3c) angeformt, insbesondere angespritzt sein, über welchen eine Ver-/Entsorung des Fluidkanals 7 mit Wärmetauschermedium erfolgen kann. Soll der Stutzen 11 länger ausgebildet werden, so kann bspw. ein Einlegeteil 12 mit einem tellerförmigen Boden 13 (vgl. Fig. 8) in den Stutzen 11 der Teilschicht 4b eingeschoben und bspw. damit durch Verschweißen bzw. Verkleben dicht verbunden werden.

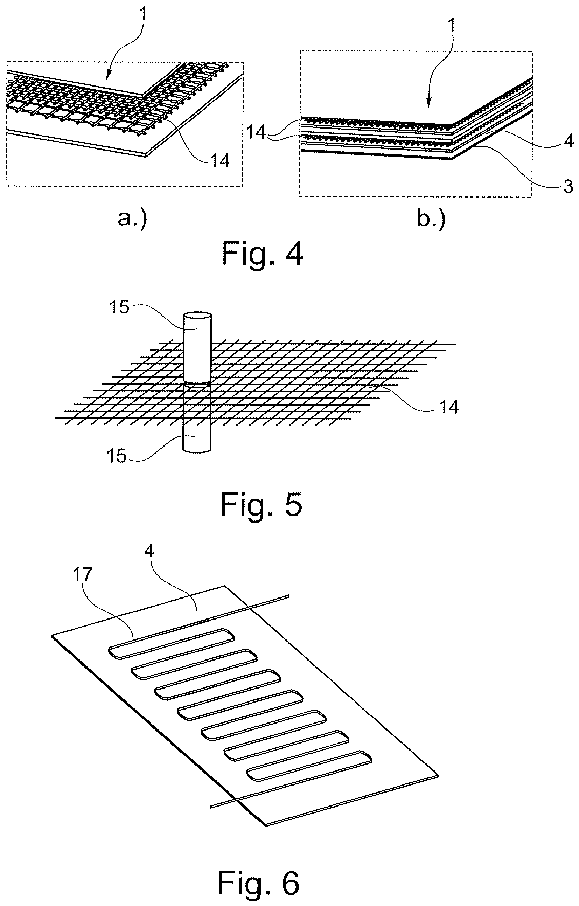

Betrachtet man die Fig. 4a und 4d, so kann man eine Bewehrung 14 in einzelnen Schichten des Wärmeübertragerbauteils 1 erkennen, wobei die Bewehrung 14 bspw. als metallisches Gestrick bzw. Gewebe oder Matte ausgebildet sein kann und die mechanische Versteifung des Wärmeübertragerbauteils 1 bewirkt.

Zur Herstellung des Stutzens 11 muss bei Vorliegen einer Bewehrung 14 diese unter Umständen im Bereich des Stutzens 11 entfernt werden, wozu gemäß der Fig. 5 bspw. ein Stempel 15 verwendet werden kann, der eine entsprechende Öffnung in die Bewehrung 14 stanzt.

Das Herstellen einer derartigen Öffnung bzw. eines entsprechenden Stutzens 11, 12 ist in den Verfahrensschritten gemäß den Fig. 7a bis 7d dargestellt. Zunächst wird im ersten Verfahrensschritt gemäß der Fig. 7a mittels des Stempels 15 die Kunststoffmatrix 16, in welche die Bewehrung 14 eingelegt ist, ausgestanzt. Die Kunststofffasern bzw. die Bewehrung 14 wird dabei, wie dies gemäß der Fig. 7b dargestellt ist, nicht beschädigt. Anschließend wird im Verfahrensschritt aus der Fig. 7c die Bewehrung 14, das heißt die einzelnen Fasern, umgeformt, um im daran anschließenden Verfahrensschritt, der gemäß der Fig. 7d dargestellt ist, den Stutzen 11 anspritzen zu können. Selbstverständlich kann dabei die Kunststoffmatrix 16 auch als Organoblech bzw. Tape ausgestaltet sein.

Blickt man zurück auf die Fig. 6, so kann man dort eine elektrisch betreibbare Heizeinrichtung 17 erkennen, die ebenfalls in der Schicht 4 angeordnet werden kann. Alternativ kann zum Beheizen des elektrischen Energiespeichers selbstverständlich auch ein entsprechendes Wärmetauschermedium verwendet werden, welches in den zugehörigen Fluidkanal 7 strömt.

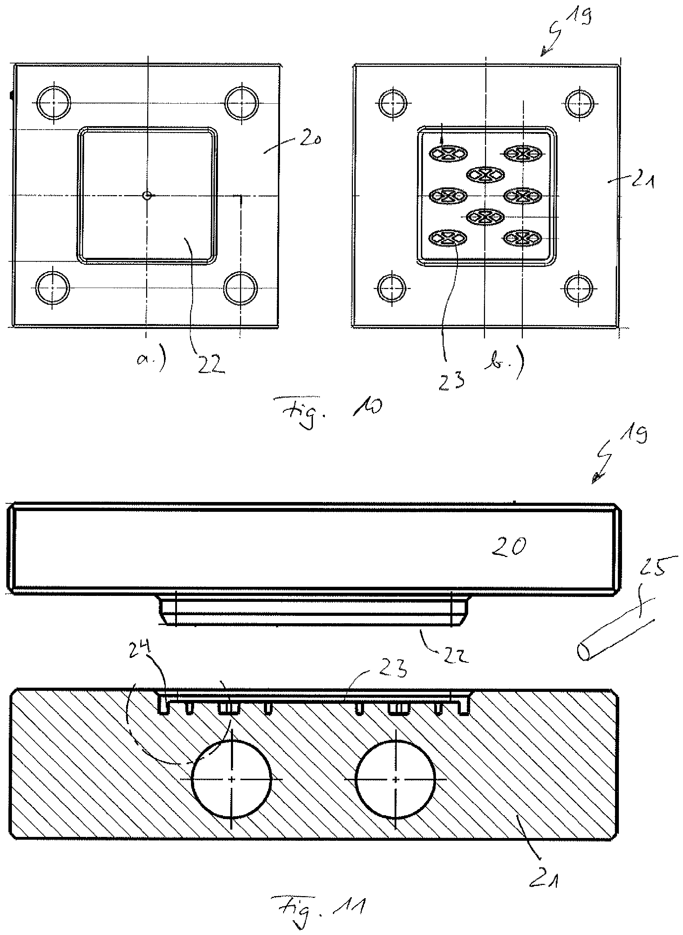

Gemäß den Fig. 10 und 11 ist ein Präge-/Presswerkzeug 19 mit jeweils einer Druckplatte 20 und einer zugehörigen Matrize 21 zur Herstellung einer Hälfte einer insbesondere fluidführenden Schicht 4 des Wärmeübertragerbauteils 1 gezeigt. Durch Zusammenfügen, beispielsweise durch miteinander Verschweißen oder Verkleben zweier solcher Hälften kann die Schicht 4 gefügt werden.

Mit dem Präge-/Presswerkzeug 19 ist beispielsweise die Herstellung von Organoblechen möglich, in die zusätzliche fluidführende Strukturen eingebracht werden. Dadurch kann auf der einen Seite eine ebene Oberfläche 22 und auf der anderen Seite eine Fluidführung 23 ohne zusätzlich notwendiges Material geformt werden. Dies wird dadurch realisiert, dass vorhandenes Matrixmaterial aus dem faserverstärkten Verbundwerkstoff in entsprechende Kavitäten 24 des Präge-/Presswerkzeuges 19 gedrückt wird. Dies erspart den zusätzlichen Prozessschritt des Anspritzens oder zusätzliche Bauteile und/ oder Material.

Sollen durch Verpressen/Prägen des sog. Organoblechs Strukturen 23 erzeugt werden für welche das Matrixmaterial nicht ausreichend ist, so kann mittels Einbringen von Zusatzmaterial die Matrixmenge erhöht werden. Hierfür kann das Zusatzmaterial in Form von einer Folie oder auch als Granulat hinzugefügt werden. Ebenfalls denkbar wäre das zusätzliche Einbringen von Schmelze. Folien aus dem entsprechenden Matrixmaterial können entweder direkt im Herstellprozess des Organoblechs oder in einem zusätzlichen Prozessschritt oder integriert in das Verpressen/Prägen des Organoblechs aufgebracht werden.

Granulat oder auch Mahlgut des entsprechenden Matrixmaterials kann durch verschiedene Verfahren ins Press-/Prägewerkzeug 19 eingebracht werden: Manuell über ein Dosiersystem 25 oder über eine Rüttelfunktion im Press-/Prägewerkzeug 19 mit Abziehvorrichtung. Bei der manuellen Zuführung werden die einzelnen Granulatkörner in definierter Anzahl in die jeweiligen, hierfür vorgesehenen Werkzeugvertiefungen, welche im anschließenden Press-/Prägeprozess die gewünschte Struktur 23 formen, eingebracht. Anhand des Dosiersystems 25 kann eine definierte Menge an Granulat dosiert und vorsortiert werden, um diese anschließend im Prozess manuell oder automatisch ausgelöst in die im Werkzeug vorgesehenen Vertiefungen zu geben. Darüber hinaus besteht die Möglichkeit, eine undefinierte Menge an Granulatkörnern auf die Matrize 21 aufzubringen, sodass über eine Rüttelfunktion die einzelnen Granulatkörner in die Vertiefungen/Kavitäten 24 fallen. Anschließend wird über eine Abziehvorrichtung das überschüssige Granulat von der Oberfläche der Matrize 21 entfernt, über eine Auffangvorrichtung gesammelt und dem Prozess wieder zugeführt.

Des Weiteren besteht die Möglichkeit des Einsatzes der Drehtisch- oder Schiebetischtechnik, um die Zugänglichkeit des Präge-/Presswerkzeuges 19 für die Zuführung des Granulats zu realisieren bzw. zu verbessern. Neben Folie und Granulat besteht auch wie oben genannt die Möglichkeit das Zusatzmaterial als Schmelze dem Press- /Prägewerkzeug 19 zuzuführen. Hierbei wird das so genannte Organoblech in das Press-/Prägewerkzeug 19 eingelegt und die gewünschte Struktur anhand des Spritzprägeprozesses gebildet. Das Präge-/Presswerkzeug 19 ist selbstverständlich beheizbar.

Mit dem erfindungsgemäßen Wärmeübertragerbauteil 1 ist es erstmals möglich, ein bisher aufwendiges separates Fertigen von wärmeübertragenden Schichten und zusätzlichen elektrischen Isolierungen nunmehr zu ersetzen. Das erfindungsgemäße Wärmeübertragerbauteil 1 ist zudem im Vergleich zu herkömmlichen wärmeübertragenden Bauteilen deutlich gewichtsreduziert.

## Patentansprüche

1. Wärmeübertragerbauteil (1) eines Temperierungssystems eines elektrischen Energiespeichers (18), wobei das Wärmeübertragerbauteil (1) aus einem Trägermaterial (2) und zumindest zwei Schichten (3,4) aufgebaut ist, wovon eine erste Schicht (3) elektrisch isolierend wirkt und eine zweite Schicht (4) eine Temperierung, das heißt ein Kühlen und ein Beheizen des elektrischen Energiespeichers (18) ermöglicht,
wobei das Trägermaterial (2) faserverstärkten Kunststoff aufweist, und/oder das Trägermaterial (2) als Organoblech, als faserverstärktes Tape/Organoblech oder als Kunststofflaminat mit integrierten Metallschichten (8,14) ausgebildet ist,
**dadurch gekennzeichnet,**
- **dass** die zweite Schicht (4) eine elektrisch betreibbare Heizeinrichtung (17) aufweist, und
- **dass** die zweite Schicht (4) Fluidkanäle (7) aufweist, die von einem Wärmetauschermedium durchströmbar sind,
- **dass** das Wärmeübertragerbauteil (1) mittels Laminieren, Kaschieren, Verpressen, Pultrusieren, Sintern, Thermoformen, Spritzgießen oder Blasextruieren hergestellt ist.

2. Wärmeübertragerbauteil nach Anspruch 1,
**dadurch gekennzeichnet,**
**dass** die zweite Schicht (4) oder eine weitere Schicht (5,6) eine wärmeleitende Struktur (8) aufweist, beispielsweise ein metallisches Gewebe oder Gestrick.

3. Wärmeübertragerbauteil nach Anspruch 1 oder 2,
**dadurch gekennzeichnet,**
**dass** an der zweiten Schicht (4), insbesondere angespritzte, Stutzen (11) zur Ver-/Entsorgung der zweiten Schicht (4) mit Wärmetauschermedium angeordnet sind.

4. Wärmeübertragerbauteil nach einem der Ansprüche 1 bis 3,
**dadurch gekennzeichnet,**
**dass** das Wärmeübertragerbauteil (1) eine Bewehrung (14) zur mechanischen Verstärkung aufweist.

5. Wärmeübertragerbauteil nach einem der Ansprüche 1 bis 4,
**dadurch gekennzeichnet,**
**dass** die zweite Schicht (4) eine vergrößerte Oberfläche (9), insbesondere gebildet durch Rippen (10), Dorne oder Flossen, aufweist.

6. Elektrischer Energiespeicher (18), insbesondere eine Traktionsbatterie eines Kraftfahrzeugs, mit einem Wärmeübertragerbauteil (1) nach einem der Ansprüche 1 bis 5, welches in wärmeübertragendem Kontakt mit einem Gehäuse des Energiespeichers steht oder ein Gehäuseteil desselben bildet.

7. Herstellungsverfahren eines Wärmeübertragerbauteils (1) nach einem der Ansprüche 1 bis 5, bei welchem
- in einem Präge-/Presswerkzeug (19) eine erste Hälfte und eine zweite Hälfte einer zweiten Schicht (4), insbesondere eines Organoblechs, geprägt bzw. gepresst werden,
- die beiden Hälften zur zweiten Schicht (4) zusammengefügt, insbesondere geschweißt oder geklebt, werden und zusammen Fluidkanäle (7) begrenzen,
- die zweite Schicht (4) mit zumindest einem Trägermaterial (2) und zumindest einer ersten Schicht (3) zum Wärmeübertragerbauteil (1) verbunden wird.

8. Verfahren nach Anspruch 7,
**dadurch gekennzeichnet,**
**dass** das Präge-/Presswerkzeug (19) während des Herstellungsvorgangs der Schicht (4) beheizt wird.

9. Verfahren nach Anspruch 8,
**dadurch gekennzeichnet,**
**dass** mittels eines Dosiersystems (25) Granulat in das Präge-/Presswerkzeug (19) eingefüllt wird, sofern zu wenig Trägermaterial (2) zur Ausbildung von gewünschten Strukturen (23) vorhanden ist.

## Claims

1. Heat transfer device component (1) of a temperature control system of an electrical energy store (18), the heat transfer device component (1) being composed of a carrier material (2) and at least two layers (3, 4), of which a first layer (3) is electrically insulating and a second layer (4) enables temperature control, that is, cooling and heating of the electrical energy store (18),
wherein the carrier material (2) has fibre-reinforced plastic, and/or the carrier material (2) is designed as an organic sheet, a fibre-reinforced tape/organic sheet or a plastics laminate having integrated metal layers (8, 14),
**characterised in that**
- the second layer (4) has an electrically operable heating device (17), and
- the second layer (4) has fluid ducts (7) through which a heat transfer device medium can flow,
- the heat transfer device component (1) is produced by lamination, coating, pressing, pultrusion, sintering, thermoforming, injection moulding or blow extrusion.

2. Heat transfer device component according to claim 1,
**characterised in that**
the second layer (4) or a further layer (5, 6) has a heat-conducting structure (8), for example a metallic fabric or knit.

3. Heat transfer device component according to claim 1 or 2,
**characterised in that**,
in particular moulded, nozzles (11) for supplying heat transfer device medium to or discharging heat transfer device medium from the second layer (4) are arranged on the second layer (4).

4. Heat transfer device component according to any of claims 1 to 3,
**characterised in that**
the heat transfer device component (1) has a reinforcement (14) for mechanical strengthening.

5. Heat transfer device component according to any of claims 1 to 4,
**characterised in that**
the second layer (4) has an enlarged surface (9), in particular formed by ribs (10), mandrels or fins.

6. Electrical energy store (18), in particular a traction battery of a motor vehicle, having a heat transfer device component (1) according to any of claims 1 to 5, which is in heat-exchanging contact with a housing of the energy store or forms a housing part thereof.

7. Method for producing a heat transfer device component (1) according to any of claims 1 to 5, in which
- a first half and a second half of a second layer (4), in particular an organic sheet, are stamped or pressed in a stamping/pressing tool (19),
- the two halves are joined together, in particular welded or glued, to form the second layer (4) and together delimit fluid ducts (7),
- the second layer (4) is connected to at least one carrier material (2) and at least one first layer (3) to form the heat transfer device component (1).

8. Method according to claim 7,
**characterised in that**
the stamping/pressing tool (19) is heated during the process for producing the layer (4).

9. Method according to claim 8,
**characterised in that**
granulate is filled into the stamping/pressing tool (19) by means of a metering system (25) if too little carrier material (2) for forming desired structures (23) is present.

## Revendications

1. Élément d'échangeur de chaleur (1) d'un système de maintien à température d'un accumulateur d'énergie électrique (18), dans lequel l'élément d'échangeur de chaleur (1) est composé d'un matériau porteur (2) et d'au moins deux couches (3, 4), dont une première couche (3) agit comme un isolant électrique et une seconde couche (4) permet un maintien à température, c'est-à-dire un refroidissement et un chauffage de l'accumulateur d'énergie électrique (18),
dans lequel le matériau porteur (2) présente une matière plastique renforcée par des fibres, et/ou le matériau porteur (2) est réalisé sous forme de tôle organique, de ruban / tôle organique renforcé(e) par des fibres ou de laminé plastique avec couches métalliques intégrées (8, 14),
**caractérisé en ce que**
- la seconde couche (4) présente un dispositif chauffant (17) à fonctionnement électrique, et
- la seconde couche (4) présente des canaux de fluide (7) qui peuvent être traversés par un fluide d'échangeur de chaleur,
- l'élément d'échangeur de chaleur (1) est fabriqué par laminage, contrecollage, compression, pultrusion, frittage, thermoformage, moulage par injection ou extrusion et soufflage.

2. Élément d'échangeur de chaleur selon la revendication 1,
**caractérisé en ce que**
la seconde couche (4) ou une autre couche (5, 6) présente une structure thermoconductrice (8), par exemple un tissu ou tricot métallique.

3. Élément d'échangeur de chaleur selon la revendication 1 ou 2,
**caractérisé en ce que**
des embouts (11), en particulier surmoulés, destinés à l'alimentation/élimination de la seconde couche (4) en fluide d'échangeur de chaleur sont agencés au niveau de la seconde couche (4).

4. Élément d'échangeur de chaleur selon l'une quelconque des revendications 1 à 3,
**caractérisé en ce que**
l'élément d'échangeur de chaleur (1) présente une armature (14) pour le renforcement mécanique.

5. Élément d'échangeur de chaleur selon l'une quelconque des revendications 1 à 4,
**caractérisé en ce que**
la seconde couche (4) présente une surface agrandie (9), en particulier par des nervures (10), ardillons ou ailerons.

6. Accumulateur d'énergie électrique (18), en particulier batterie de traction d'un véhicule automobile, avec un élément d'échangeur de chaleur (1) selon l'une quelconque des revendications 1 à 5, qui est en contact de transfert de chaleur avec un corps de l'accumulateur d'énergie ou qui constitue une partie de corps de celui-ci.

7. Procédé de fabrication d'un élément d'échangeur de chaleur (1) selon l'une quelconque des revendications 1 à 5, selon lequel
- dans un outil d'estampage/presse (19), une première moitié et une seconde moitié d'une seconde couche (4), en particulier d'une tôle organique, sont estampées ou pressées,
- les deux moitiés sont réunies, en particulier soudées ou collées, pour former la seconde couche (4), et délimitent conjointement des canaux de fluide (7),
- la seconde couche (4) est assemblée à au moins un matériau porteur (2) et au moins une première couche (3) pour former l'élément d'échangeur de chaleur (1).

8. Procédé selon la revendication 7,
**caractérisé en ce que**
l'outil d'estampage/presse (19) est chauffé pendant le processus de fabrication de la couche (4).

9. Procédé selon la revendication 8,
**caractérisé en ce que**,
au moyen d'un système de dosage (25), l'outil d'estampage/presse (19) est rempli de granulat dans la mesure où il y a trop peu de matériau porteur (2) pour réaliser des structures souhaitées (23).
